# EUROPÄISCHE PATENTSCHRIFT

(11) **EP 3 133 382 B1**
(45) Veröffentlichungstag und Bekanntmachung des Hinweises auf die Patenterteilung: **08.08.2018**
(21) Anmeldenummer: 16401050.6
(22) Anmeldetag: 16.08.2016
(51) Int. Cl.: G01M 9/04, G01M 13/00, G01M 17/00, G01M 99/00, B01L 1/00

(54) **KLIMAFAHRZEUG MIT WINDKANAL UND VERFAHREN ZUM DYNAMISCHEN TESTEN VON FAHRZEUGKOMPONENTEN**
CLIMATE VEHICLE WITH WIND TUNNEL AND METHOD FOR DYNAMIC TESTS ON VEHICLE COMPONENTS
VEHICULE CLIMATISE COMPRENANT UNE SOUFFLERIE ET PROCEDE D'ESSAI DYNAMIQUE DE COMPOSANTS DE VEHICULE

(30) Priorität: 18.08.2015 DE 102015113610
(43) Veröffentlichungstag der Anmeldung: 22.02.2017
(73) Patentinhaber: IAV GMBH, 10587 Berlin (DE)
(72) Erfinder: Jentsch, Andreas, 38518 Gifhorn (DE); Junghans, Janek, 31275 Lehrte (DE); Marx, Kai-Alexander, 30161 Hannover (DE); Thormann, Arne, 38518 Gifhorn (DE)
(74) Vertreter: Fukala, Georg

(56) Entgegenhaltungen:
- WO-A1-2015/090734
- DE-U1- 8 532 913
- JP-A- H08 313 390

## Beschreibung

Die Erfindung betrifft ein Klimafahrzeug mit Windkanal zum dynamischen Testen von Fahrzeugkomponenten unter definierten kinetischen und klimatischen Bedingungen sowie ein Verfahren zum dynamischen Testen von Fahrzeugkomponenten unter definierten kinetischen und klimatischen Bedingungen.

### Stand der Technik

Es ist bekannt, Fahrzeuge und Fahrzeugkomponenten unter klimatisch definierten Bedingungen zu testen. In der Entwicklung von Fahrzeugen und deren Komponenten werden stationäre Testanlagen, beispielsweise Prüfstände, genutzt. Erst wenn das Fahrzeug nahezu ausgereift ist, werden sehr kostenintensive Testfahrten in klimatisch anspruchsvollen Gebieten durchgeführt. Da jedoch auch in diesen Gebieten die Bedingungen nicht ganzjährig gleich sind, kann das Fahrzeug meist nur zu bestimmten Jahreszeiten getestet werden. Dieses Problem existiert, seit dem Fahrzeugkomponenten unter definierten klimatischen Bedingungen getestet werden. Verschärft wird es in letzter Zeit, weil immer kürzer werdende Entwicklungs- bzw. Fahrzeuglebenszyklen dafür sorgen, dass ganzjährig getestet werden muss und keine Rücksicht auf bestimmte Jahreszeiten genommen werden kann.

Die Offenlegungsschrift DE 28 46 742 A1 beschreibt eine Temperieranlage für Versuchsobjekte, wobei die Anlage aus einem das Versuchsobjekt aufnehmenden Kanal, einem Gebläse und einer Kühl- und/oder Heizvorrichtung für die vom Gebläse geförderte Luft besteht. Bei dem Versuchsobjekt handelt es sich insbesondere um eine Fahrzeug-Brennkraftmaschine. Weiterhin weist der Kanal Durchführungen auf, durch welche für den Versuchsbetrieb erforderliche Leitungen, Rohre, Wellen und ähnliches führen. Ein weiterer Aspekt betrifft den im Kanal angeordneten oder gebildeten Durchströmungsquerschnitt zwischen dem Versuchsobjekt und den dieses umgebenden Kanalwänden. Dieser entspricht in etwa dem Durchströmungsquerschnitt, der auch im praktischen Einsatz des Objektes vorhanden ist. Diese als grundlegender Stand der Technik verstandene Anlage weist zwei wesentliche Prinzip bedingte Nachteile auf. Einerseits kann ein Test nur im stationären Betrieb erfolgen. Dynamische Einflussgrößen können nicht einbezogen werden. Andererseits ist der erzeugbare Temperaturbereich vor allem in Richtung tiefere Temperaturen durch das geschlossene Kanalsystem, das dadurch begrenzte Volumen der förderbaren Luft und den im Vergleich dazu relativ großen Wärmeeintrag der Fahrzeug-Brennkraftmaschine begrenzt.

Die Offenlegungsschrift DE 10 2009 020 601 A1 offenbart einen Freistrahl-Rollenprüfstand für ein Kraftfahrzeug, mit einem das Fahrzeug an den Antriebsrädern abstützenden und von diesem angetriebenen Rollenaggregat, einem das Fahrzeug frontseitig entsprechend der simulierten Fahrgeschwindigkeit mit einem Freiluftstrahl beaufschlagten Fahrtwindgebläse und einem die strömungsabhängigen Kennwerte ermittelnden Messsystem. Eine realitätsnahe Fahrzeugumströmung wird dadurch erreicht, dass das Fahrtwindgebläse mit einem sich vom Gebläseauslass bis in den Bereich der Fahrzeugfront erstreckenden und diese konturnah umhüllenden Strömungsschirm versehen ist. Es ist nicht vorgesehen, die Luft, die den Fahrtwind simuliert, zu klimatisieren, weshalb der Prüfstand als Freistrahl-Prüfstand ausgeführt ist. Im Übrigen ist auch hier der stationäre Betrieb vorgesehen. Es können keine dynamischen Einflussgrößen getestet werden.

Aus der Vielzahl weiterer vorgeschlagener Prüfstände sei noch die DE 10 2005 006 081 B4 genannt. Dieses Dokument beschreibt eine Testanlage für Bekleidung, Schutzausrüstungen und Zweiradzubehör mit einem Gebläse und einem Gebläseaustritt, der in einen Testraum mündet. Die transportable Testanlage weist in dem Testraum eine Bedieneinrichtung für eine Steuereinrichtung zur Steuerung des Gebläses auf, wobei die Bedieneinrichtung an einem in dem Testraum angeordneten Zweirad angeordnet ist. Die Testanlage ist zwar transportabel, vorzugsweise durch Anordnung in einem mobilen Container, allerdings nur stationär einsetzbar. Damit können keine dynamischen Einflussgrößen getestet werden.

Das Gebrauchsmuster DE 85 32 913 U1 offenbart eine Einrichtung zur Simulation von Witterungsbedingungen für die Untersuchung von Prüfobjekten, insbesondere zur Prüfung von Kraftfahrzeugen oder Baugruppen davon. Die Einrichtung ist in einen transportablen Großbehälter integriert und umfasst einen zur Aufnahme des Prüfobjektes dienenden Klimaraum, diesem zugeordnete Sonnensimulationseinrichtungen und Einrichtungen zum Aufrechterhalten einer vorbestimmbaren Klimatemperatur sowie einen Kontrollraum.

Die Offenlegungsschrift DE 101 55 245 A1 beschreibt eine Einrichtung zur Simulation von Witterungsbedingungen, wobei eine doppelwandige Bewitterungskammer gebildet, bei der zwischen Außenwand und Innenwand ein Zwischenraum verbleibt. Die aus Seitenwänden, einer Bodenwand und einer Deckenwand bestehende Innenwand bildet den Bewitterungsraum. Eine Lufteinlassöffnung des Bewitterungsraumes ist in der Deckenwand angeordnet, eine Luftauslassöffnung in der Bodenwand. Dadurch ergibt sich eine Durchströmungsrichtung des Bewitterungsraumes von oben nach unten, womit eine weitgehend gleiche Temperaturverteilung am Prüfobjekt erreicht wird.

Das Dokument DE 44 22 039 A1 offenbart eine Überwachungseinrichtung für elektrische Bauelemente, die nicht in Dauerversuchsanlagen unter verschiedenen Bedingungen, wie extremen Temperaturen, Druckschwankungen und hoher Luftfeuchtigkeit, getestet werden sollen, sondern unter realen Umgebungsbedingungen auf ihre Funktionstüchtigkeit hin zu prüfen. Dazu besitzt die Überwachungseinrichtung Sensoren zu Gewinnung von Umgebungsmesswerten, Messeinrichtungen zur Gewinnung von Funktionsmesswerten für Funktionsparameter, eine Vergleichseinrichtung zum Vergleich der gemessenen Werte mit Bezugswerten, Speichermittel, die abweichende Messwerte zusammen mit den zeitlich korrelierenden Umgebungsmesswerten bzw. Funktionsmesswerten aufzeichnen und eine Ausgabeschnittstelle. Dadurch soll ermöglicht werden, bei einer Störung auch im Nachhinein die Bedingungen erforschen zu können, die zu der Störung bzw. zum Ausfall des Bauelementes geführt haben.

Weitere Testanlagen, die zwar transportabel, aber nur stationär einsetzbar sind, werden in den Dokumenten DE 10 2009 020 182 A1, DE 20 2012 102 843 U1 und JP H 08313390 A beschrieben. Das Dokument WO 2015/090734 A1 beschreibt einen Prüfstand und ein Verfahren zur Bestimmung eines thermischen Verhaltens einer Zündkerze.

### Aufgabe der Erfindung

Aufgabe der Erfindung ist es, eine Vorrichtung und ein Verfahren anzugeben, die das Testen von Fahrzeugkomponenten unter realistischen Bedingungen, insbesondere unter dynamischen und klimatischen sowie strömungstechnischen Einflussgrößen, ermöglicht.

Diese Aufgabe wird durch ein Klimafahrzeug mit Windkanal zum Testen einer Fahrzeugkomponente unter definierten klimatischen Bedingungen entsprechend der Merkmale des unabhängigen Anspruchs 1 sowie durch ein Verfahren zum Testen einer Fahrzeugkomponente unter definierten klimatischen Bedingungen in einem Klimafahrzeug entsprechend den Merkmalen des unabhängigen Anspruchs 7 gelöst. Vorteilhafte Weiterbildungen und Ausführungsformen der erfindungsgemäßen Lösung ergeben sich durch die jeweils abhängigen Ansprüche.

### Offenbarung der Erfindung

Die Erfindung betrifft ein Klimafahrzeug zum Testen einer Fahrzeugkomponente unter definierten klimatischen Bedingungen. Um möglichst realistische Tests durchzuführen, ist erfindungsgemäß vorgesehen, die zu testende Fahrzeugkomponente in einem beweglichen Objekt zu testen, welches die im späteren Einsatz tatsächlich auftretenden dynamischen Kräfte auf die Fahrzeugkomponente überträgt. Schließlich bedarf es definierter Strömungsbedingungen, um die Fahrzeugkomponenten realistisch testen zu können. Bei dem Objekt handelt es sich selbst auch um ein Fahrzeug. Da die zu testende Fahrzeugkomponente neben den dynamischen Kräften auch unter definierten klimatischen und strömungstechnischen Bedingungen getestet wird, wird das Objekt zur besseren Unterscheidung als Klimafahrzeug bezeichnet. Das Klimafahrzeug ist dabei bevorzugt von dem Typ Fahrzeug, von dem auch die zu testende Fahrzeugkomponente stammt. Denkbar sind, neben dem bevorzugten Typ Landfahrzeug, insbesondere in Form eines Kraftfahrzeugs, auch Wasserfahrzeuge, Luftfahrzeuge oder Raumfahrzeuge. Da jeder dieser Typen im Einsatz unterschiedlichen dynamischen Einflussgrößen unterliegt, ist der Test der zu testenden Fahrzeugkomponente im gleichen Typ am realitätsnächsten. Die zu testende Fahrzeugkomponente kann dabei ein einzelnes Bauteil, eine Baugruppe aus einzelnen Bauteilen oder auch ein Funktionsmodul, wie ein Antriebsaggregat, sein. Selbstverständlich kann auch ein komplettes Fahrzeug getestet werden, was jedoch unter Beachtung der wirtschaftlichen Verhältnismäßigkeit erfolgen sollte. Definierte klimatische Bedingungen betreffen eine definierte, also auswählbare Temperatur, eine Luftfeuchte oder eine Luftzusammensetzung, beispielsweise einen Anteil gelöster bzw. als Aerosol vorliegender Stoffe, wie Salznebel oder ähnliches. Selbstverständlich können die klimatischen Bedingungen auch eine Kombination dieser drei Komponenten darstellen. Bevorzugt ist dabei das Einstellen der definierten Temperatur, weil damit die meisten Testszenarien abgedeckt werden können. Definierte strömungstechnische Bedingungen betreffen das gezielte Anströmen der zu testenden Fahrzeugkomponente mit der definiert klimatisierten Luftzusammensetzung in Bezug auf Anströmrichtung, Anströmwinkel und Anströmgeschwindigkeit.

Das erfindungsgemäße Klimafahrzeug weist eine durch eine Kabinenaußenhaut von einer das Klimafahrzeug umgebenden Klimafahrzeugumgebung abgetrennte Kabine auf. Die Kabine muss dichtend abgetrennt werden, damit definierte klimatische Bedingungen unabhängig von der Klimafahrzeugumgebung erzeugt und vor allem konstant gehalten werden können. Die Kabinengröße muss eine relativ zur Größe der zu testenden Fahrzeugkomponente wirtschaftlich verhältnismäßige Klimatisierung ermöglichen. Ist sie zu groß, verursacht der Klimatisierungsbedarf einen zu großen Aufwand. Ist sie zu klein, können Einflussfaktoren der Fahrzeugkomponente selbst oder weitere Einrichtungen des Klimafahrzeugs innerhalb der Kabine zu zu stark schwankenden Klimabedingungen führen. Die Größe der Kabine ist durch die Klimaaußenhaut definiert, welche selbstverständlich auch teilweise durch Abschnitte eines Klimafahrzeugunterbaus oder einer Fahrerkabinenwand gebildet sein kann. Vorzugsweise ist die Kabine als ein von allen Seiten durch eine separate Kabinenaußenhaut gebildetes getrenntes Volumen ausgebildet. Die Kabinenaußenhaut kann herkömmlich aus Blech bestehen und alternativ oder zusätzlich Isolierungsmaterialien, Leichtbaukomponenten oder durchsichtige und nicht durchsichtige Glaskomponenten aufweisen. Die Wahl des Materials der Kabinenaußenhaut hängt vor allem vom Typ des Klimafahrzeugs und dessen Umgebung sowie dem Grad der gewünschten Energieeffizienz bzw. der zur Verfügung stehenden Klimatisierungsleistung ab.

Das erfindungsgemäße Klimafahrzeug weist weiterhin eine in der Kabine angeordnete Klimatisierungseinheit zum Klimatisieren der in der Kabine vorhandenen Luft auf. Klimatisierungseinheiten an sich sind bekannt. Diese stellen die Temperatur von angesaugter Luft ein. Oft sind sie gleichzeitig in der Lage, einen Luftfeuchteanteil einzustellen. Sollen bestimmte Anteile gelöster oder als Aerosol vorliegender Stoffe in die Luft eingebracht werden, kann dies in der Klimatisierungseinheit selbst oder in einer der im Luftstrom vor- oder nachgelagerten separaten Einheit erfolgen. Analog kann das Herausfiltern bestimmter in der Luft gelöster Stoffe separat oder in der Klimatisierungsanlage integriert erfolgen. Wenn von Luft die Rede ist, ist vorzugsweise die Luftzusammensetzung der Erdatmosphäre in Erdnähe gemeint. Der Luftdruck kann dabei variabel sein und wird unter den definierten klimatischen Bedingungen subsummiert. Alternativ dazu kann die Luft auch eine spezielle Zusammensetzung einzelner oder mehrerer Gase sein. Dies ist abhängig vom jeweiligen Testzweck, wird aber aufgrund der gewünschten Realitätsnähe eher selten der Fall sein. Eine bekannte Kombination aus Kabine und Klimatisierungseinheit ist die Kühlkabine eines Kühltransporters. Die Klimatisierungseinheit kann auch außerhalb der Kabine angeordnet sein und benötigt dann Durchführungen zur Entnahme und Rückgabe der Luft. Ist die zu testende Fahrzeugkomponente vom Typ eines Wasserfahrzeugs, wird der Fachmann erkennen, dass das Strömungsmedium Luft durch das Strömungsmedium Wasser ersetzt werden kann. Die Klimatisierung findet dabei analog statt. Gleiches gilt für das Testen von Fahrzeugkomponenten vom Typ Raumfahrzeug. Neben den dynamischen Komponenten zeichnet sich der Test in diesem Fall durch eine Anströmgeschwindigkeit von Null und einem relativ niedrigen Luftdruck aus.

Als weiteres Merkmal weist das erfindungsgemäße Klimafahrzeug ein Gebläse zum Beschleunigen der klimatisierten Luft in eine definierte Richtung auf, also zum Erzeugen einer definierten Anströmung. Daher ist das Gebläse in seiner Funktion eine Strömungsanlage, welche auch bei anderen Strömungsmedien analog eingesetzt wird. Es ist bekannt, dass ein Gebläse, beispielsweise ein Propeller oder ein Ventilator, einen Antrieb aufweist und einen Gebläseeintritt und einen Gebläseaustritt umfasst. Ein Gebläse dient zum Beschleunigen von Luft, auch bezeichnet als Erzeugung von Wind. Gebläseeintritt und Gebläseaustritt bezeichnen auch die Vorderseite (stromaufwärts der Luftströmung) und Rückseite (stromabwärts der Luftströmung) des Gebläses. Sie können offen gestaltet sein, wie bei einem Propeller oder umhaust sein, wie bei einem Ventilator. Die Richtung der beschleunigten Luft wird durch die Flügelgestaltung der Rotoren des Gebläses hervorgerufen und entspricht im Allgemeinen der Achse des Rotors. Das Gebläse bzw. dessen Rotorachse ist vorzugsweise fest ausgerichtet, kann aber auch variabel, also über die Zeit veränderlich sein.

Das Klimafahrzeug umfasst außerdem einen Kanal mit einer Eintrittsöffnung zur Aufnahme beschleunigter klimatisierter Luft, mit einem röhrenförmigen Kanalteil zum Führen der beschleunigten klimatisierten Luft und mit einer Austrittsöffnung zur Abgabe der geführten beschleunigten klimatisierten Luft in die Kabine, wobei der Kanal einen Abschnitt zur Aufnahme der zu testenden Fahrzeugkomponente aufweist. Die Eintrittsöffnung ist vorzugsweise stromabwärts des Gebläses angeordnet, so dass die durch das Gebläse beschleunigte Luft durch die Eintrittsöffnung in den Kanal eintreten kann. Ob der Kanal koaxial zur Rotorachse des Gebläses bzw. zur Strömungsrichtung der beschleunigten Luft angeordnet ist, oder die Luft über Umlenkeinrichtungen, beispielsweise weitere abgewinkelte Kanalstücke, vom Gebläse zur Eintrittsöffnung geführt ist, hängt vom Platzangebot in der Kabine, der zu testenden Fahrzeugkomponente, vor allem von deren Abmessungen, sowie vom konkreten Testfall ab und liegt im Ermessen des Fachmanns. Analoges gilt für die Gestaltung der Austrittsöffnung. Auch diese muss so gestaltet und angeordnet sein, dass die Luft ohne Widerstände aus dem Kanal austreten kann. Vorzugsweise ist die Ausgangsöffnung gebogen ausgeführt, um die austretende Luft nicht senkrecht auf eine Kabinenwand, sondern tangential zu dieser oder in Richtung Kabinenraummitte zu führen.

Der röhrenförmige Kanalteil zum Führen der beschleunigten klimatisierten Luft weist in dem Abschnitt zur Aufnahme der zu testenden Fahrzeugkomponente einen Zugang zum Kanal auf. Dieser Zugang kann durch eine Klappe oder eine ähnliche verschließbare und luftdichte Verschlussvorrichtung gebildet sein. Dem Abschnitt kann ein Gestell zum Festlegen der zu testenden Fahrzeugkomponente innerhalb des Kanals zugeordnet sein. Dem Abschnitt kann ein Einsatz zugeordnet sein, der die tatsächliche räumliche Situation ausformt bzw. modelliert, in der sich die zu testende Fahrzeugkomponente am Einbauort des der Fahrzeugkomponente zugeordneten Fahrzeugs befindet. Schließlich weist der röhrenförmige Kanal und der Abschnitt zur Aufnahme der zu testenden Fahrzeugkomponente Durchführungen zur Bereitstellung von Funktions- und Versorgungsleitungen für die Fahrzeugkomponente sowie gegebenenfalls für Leitungen zum Bereitstellen von Energie für Messsensoren und Übertragen der Messergebnisse auf. Alternativ dazu können die Messwerte, wie Temperatur oder elektrische Kenngrößen (Strom, Spannung, Widerstand) drahtlos übertragen werden.

Das erfindungsgemäße Klimafahrzeug weist gegenüber dem Stand der Technik zwei große Vorteile auf. Der wichtigste Vorteil ist die Möglichkeit des dynamischen Testens von Fahrzeugkomponenten. So können Vorgänge unter klimatisch und dynamisch bzw. kinematisch definierten Bedingungen getestet werden. Dies können Fluidfördervorgänge, wie das Verhalten einer Einspritzanlage, sein. Dies können weiterhin Fluidlagerungsvorrichtungen sein, wie ein Kraftstoff- oder Abgasnachbehandlungsflüssigkeitstank sein. Dies können auch einzelne Bauteile, wie die Aufhängung einer Abgasanlage sein, deren schwingungsdämpfenden Komponenten aus Gummi bestehen und deren Verhalten bei Kälte und Querbeschleunigungen getestet werden soll. Schließlich kann es sich bei der zu testenden Fahrzeugkomponente um ein komplexes Aggregat, wie eine komplette Brennkraftmaschine, handeln. Der zweite Vorteil ist die Möglichkeit, konstante klimatische Bedingungen zu erzeugen, die durch die Anordnung des nicht geschlossenen Kanals in einem größeren klimatisierten Volumen unempfindlich gegenüber einem durch die Fahrzeugkomponente oder zusätzliches Testgerät eingebrachten Wärmeeintrag ist.

In einer vorteilhaften Ausgestaltung der vorliegenden Erfindung weist der Kanalteil des Kanals in Strömungsrichtung der beschleunigten klimatisierten Luft vor dem Abschnitt zur Aufnahme der zu testenden Fahrzeugkomponente ein Luftführungselement, wie ein Leitblech, auf, das ausgebildet ist, die beschleunigte klimatisierte Luft in Strömungsrichtung derart abzulenken, dass die zu testende Fahrzeugkomponente unter denselben Bedingungen umströmt wird, wie sie am Einbauort des der Fahrzeugkomponente zugeordneten Fahrzeugs vorhanden ist. Dies erhöht weiter die Realitätsnähe des Tests.

In einer alternativen Ausgestaltung der vorliegenden Erfindung weist der Kanalteil des Kanals in Strömungsrichtung der beschleunigten klimatisierten Luft vor dem Abschnitt zur Aufnahme der zu testenden Fahrzeugkomponente ein Luftführungselement, wie ein Leitblech, auf, das ausgebildet ist, die beschleunigte klimatisierte Luft in Strömungsrichtung derart abzulenken, dass die zu testende Fahrzeugkomponente mit maximaler Anströmgeschwindigkeit der klimatisierten Luft angeströmt werden kann, ohne die klimatisierte Luft an der zu testenden Fahrzeugkomponente und/oder am röhrenförmigen Kanalteil durch Verwirbelungen innerhalb der fluiddynamischen Grenzschicht zu beeinflussen. Aufgrund von Reibung zwischen den einzelnen Luftmolekülen und zwischen den Luftmolekülen und den Wandbereichen der zu testenden Fahrzeugkomponente bzw. den Kanalwänden entsteht die dem Fachmann bekannte fluiddynamische Grenzschicht. Diese soll als laminare Strömung vorliegen, um die Anströmgeschwindigkeit nicht durch Verwirbelungen (turbulente Strömung) abzubremsen. Der Fachmann wird die aerodynamische Auslegung entsprechend der gewünschten Anströmungsgeschwindigkeit und damit der gewünschten Testgeschwindigkeit vornehmen.

In einer weiteren vorteilhaften Ausgestaltung steht das Gebläse, insbesondere dessen Antrieb, mit einer Steuereinheit zum Steuern der Gebläsestärke in Verbindung und die Steuereinheit steht weiterhin mit einer Geschwindigkeitsmesseinheit und/oder Geschwindigkeitsanzeigeeinheit in Verbindung. Dies ermöglicht vorteilhafterweise die Steuerung bzw. Regelung der Gebläsestärke in Abhängigkeit der tatsächlich vom Klimafahrzeug gefahrenen Geschwindigkeit, wodurch die Realität noch besser abgebildet ist. Die Geschwindigkeitsmesseinheit kann ein Raddrehzahlsensor oder ein dieses Sensorsignal auswertendes Steuergerät, z. B. ein ESP-Steuergerät, sein, welches über einen CAN-Bus des Klimafahrzeugs abgehört werden kann. Alternativ oder zusätzlich dazu kann die Steuereinheit in einfacher Weise mit dem Tachometer des Klimafahrzeugs in Verbindung stehen.

In einer weiteren Ausführungsform ist in dem Abschnitt zur Aufnahme der zu testenden Fahrzeugkomponente eine Heizeinrichtung angeordnet. Diese Heizeinrichtung kann weitere Fahrzeugkomponenten simulieren, beispielsweise eine Abgasanlage. Dazu ist die Heizeinrichtung derart geformt und angeordnet, wie die Abgasanlage am Einbauort der zu testenden Fahrzeugkomponente, also gerade oder gekrümmt und über oder unter der zu testenden Fahrzeugkomponente. Da es um definierte klimatische Bedingungen geht, müssen auch die relevanten Temperatureinflüsse betrachtet werden, um realitätsnah testen zu können.

Schließlich sind in einer besonders vorteilhaften Ausgestaltung der Erfindung der Kanal und/oder das Gebläse entfernbar, vorzugsweise rückstandslos entfernbar angeordnet. Damit kann das Klimafahrzeug zwischen einzelnen Testfahrten einer anderen Verwendung zugeführt werden.

Die Erfindung betrifft weiterhin ein Verfahren zum Testen einer Fahrzeugkomponente unter definierten klimatischen Bedingungen in einem Klimafahrzeug, bei dem ein Kanal mit einem Eingang, einem Kanalteil und einem Ausgang sowie ein Gebläse in einer durch eine Kabinenaußenhaut von der Klimafahrzeugumgebung abgetrennten Kabine des Klimafahrzeugs reversibel, also lösbar, oder irreversibel, also dauerhaft nicht lösbar oder nicht rückstandsfrei lösbar, festgelegt werden. Es wird weiterhin die zu testende Fahrzeugkomponente in einem dem Kanalteil zugeordneten Abschnitt zur Aufnahme der zu testenden Fahrzeugkomponente angeordnet. Dies geschieht durch Öffnen des Zugangs zu diesem Abschnitt, Einbringen und Befestigen der zu testenden Fahrzeugkomponente und Schließen des Zugangs. Danach wird eine in der Kabine angeordnete Klimatisierungseinheit zum Klimatisieren der in der Kabine vorhandenen Luft auf eine Zielklimatisierung eingestellt. Dies beinhaltet das Aktivieren der Klimatisierungseinrichtung, vorzugsweise vom Klimafahrzeug bzw. aus der Fahrerkabine des Klimafahrzeugs aus, das Einstellen der Zieltemperatur, der Zielluftfeuchte und/oder der Zielzusammensetzung der Luft, sowie das Starten der Klimatisierungseinrichtung.

Dann wird das Gebläse bzw. dessen Antrieb auf eine Gebläsestärke in Abhängigkeit einer im Klimafahrzeug gemessenen und/oder angezeigten Geschwindigkeit oder in Abhängigkeit einer vorgegebenen Geschwindigkeit bzw. eines Geschwindigkeitsprofils eingestellt, also vorgegeben und aktiviert. Schließlich wird das Klimafahrzeug auf einer zufälligen oder vorgegebenen Strecke bewegt. Dabei wird vorzugsweise von einem Testfahrer oder Testingenieur gesteuert, kann aber auch autonom fahren.

Mit der erfindungsgemäßen Vorrichtung und dem erfindungsgemäßen Verfahren ist es erstmals möglich, Fahrzeugkomponenten unter realistischen Bedingungen, also unter Einbeziehung dynamischer bzw. kinematischer Einflussgrößen, wie Beschleunigungskräfte oder Trägheitskräfte, zu testen.

In einer vorteilhaften Weiterbildung des erfindungsgemäßen Verfahrens wird eine in dem Abschnitt zur Aufnahme der zu testenden Fahrzeugkomponente angeordnete gerichtet geformte Heizeinrichtung in Abhängigkeit von der im Klimafahrzeug gemessenen und/oder angezeigten Geschwindigkeit und/oder in Abhängigkeit von der seit Testbeginn vergangenen Zeit angesteuert. Damit kann der Einfluss einer weiteren Fahrzeugkomponente, beispielsweise einer Abgasanlage, realitätsnah simuliert werden. Je schneller dabei das Klimafahrzeug fährt bzw. das Geschwindigkeitsprofil des Gebläses eingestellt ist, desto stärker kann die Heizeinrichtung angesteuert werden. Zu Beginn des Tests kann die Heizeinrichtung nicht aktiviert sein. Das Aufheizen der Heizeinrichtung kann bei langsamer Fahrt verzögert werden und bei schneller Fahrt beschleunigt werden.

Selbstverständlich erfolgt vor, während und/oder nach dem Test eine Erfassung von Messdaten von Messsensoren. Dies können Temperaturwerte oder elektrische Kenngrößen, wie Strom, Spannung und/oder Widerstände sein, die Rückschlüsse auf das Verhalten der zu testenden Fahrzeugkomponente zulassen.

### Ausführungsbeispiel

Weitere Merkmale, Anwendungsmöglichkeiten und Vorteile der Erfindung ergeben sich aus der nachfolgenden Beschreibung von Ausführungsbeispielen der Erfindung, die schematisch in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

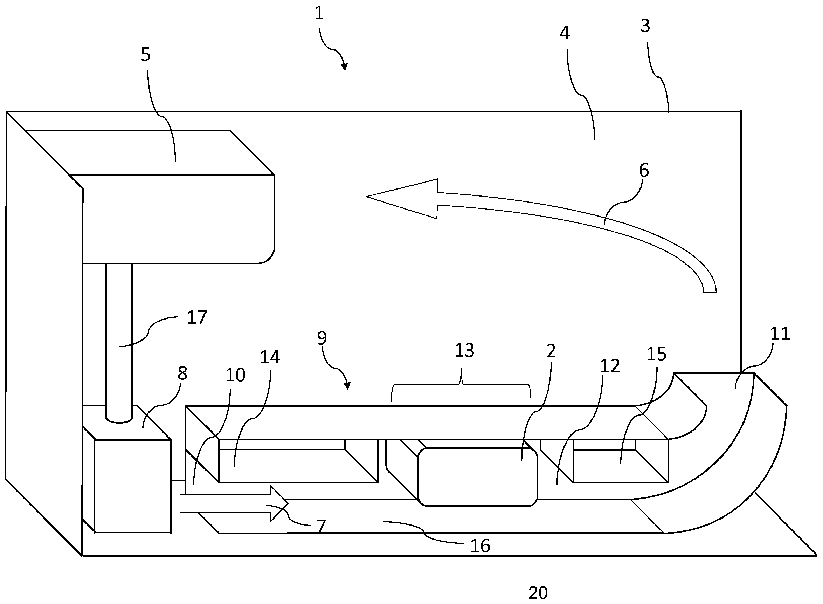

Hierbei zeigt die einzige Figur 1 eine schematische Schnittdarstellung eines Klimafahrzeugs 1 mit einem Windkanal 9. Das Klimafahrzeug 1 weist eine Klimatisierungsvorrichtung 5 auf. Diese kann fest vorinstalliert oder reversibel angeordnet sein. Herkömmliche, in Kühltransportern vorhandene Klimatisierungsvorrichtungen 5 sind stufenlos auf bis zu -30°C regelbar. Dieser Temperaturbereich ist für die meisten Klimatests ausreichend. Werden noch tiefere Temperaturen benötigt, sind verbesserte Klimatisierungsvorrichtungen 5 und eine bessere Kabinenisolierung notwendig.

Die Kabine 4 des Klimafahrzeugs 1 ist durch die Kabinenaußenwand 3 angedeutet. Im dargestellten Beispiel entspricht die Kabinenaußenwand 3 der in Fahrtrichtung des Klimafahrzeugs 1 gesehenen rechten Kabinenaußenwand. Derartige Kabinen 4 sind als geschlossene isolierte Kabinen herkömmlicher Kühltransporter bekannt und als einfachste Ausführungsform für die vorliegende Erfindung anwendbar. Die Luft in der Kabine 4 ist durch die Pfeile mit den Bezugszeichen 6 und 7 angedeutet. Die Luft wird von der Klimatisierungseinrichtung 5 angesaugt, klimatisiert, also abgekühlt, erwärmt, befeuchtet, entfeuchtet oder mit einem Aerosol, z. B. einem Salznebel, angereichert. Anschließend wird die derart klimatisierte Luft in Richtung eines Gebläses 8 abgegeben. Vorteilhafterweise geschieht dies über ein Verbindungsrohr 17, kann jedoch auch ohne separate Luftführung erfolgen. Das Gebläse 8 beschleunigt die klimatisierte Luft 7 in Richtung der Eintrittsöffnung 10 des Windkanals 9. Wie stark die Luft beschleunigt wird, hängt von einem voreingestellten Geschwindigkeitsprofil oder der aktuell gefahrenen Geschwindigkeit des Klimafahrzeugs 1 ab, welche über eine Verbindung mit dem nicht dargestellten Geschwindigkeitsmesser oder -anzeiger des Klimafahrzeugs 1 von einer ebenfalls nicht dargestellten Steuereinheit des Gebläses 8 empfangen wird.

Der Windkanal 9 ist ausgeführt als ein röhrenförmiger Kanal 12, hier mit rechteckigem Querschnitt. Der röhrenförmige Kanal 12 weist einen Abschnitt 13 zur Aufnahme einer zu testenden Fahrzugkomponente 2 auf. Im vorliegenden Beispiel handelt es sich um einen Reduktionsmitteltank 2. Reduktionsmittel gefriert als wässrige Harnstofflösung bei ca. -11°C. Daher sind diese Tanks üblicherweise mit Heizvorrichtungen ausgestattet. Um zu testen, ob diese funktionieren und ausreichend dimensioniert sind, also genügend Heizleistung aufbringen können, bedarf es realistischer Versuche, die auch die Bewegung des Reduktionsmittels umfassen. Daher muss eine entsprechend kalte Umgebung geschaffen werden, die auch dem geschwindigkeitsabhängigen Fahrtwind Rechnung trägt.

Die beschleunigte klimatisierte Luft 7 strömt durch den röhrenförmigen Kanalteil 12 und umströmt den Reduktionsmitteltank 2, wie es der Fahrtwind im späteren Einbauort tun würde. Um dies zu erreichen, sind Luftführungselemente 14 und 15 in Strömungsrichtung der Luft 7 vor und nach dem Reduktionsmitteltank 2 angeordnet. Die Luftführungselemente 14, 15 sorgen vor allem für einen Abstand zwischen Windkanalboden 16 und den Luftführungselementen 14 und 15, der dem Abstand zwischen der Straße und dem Fahrzeugunterbau im späteren Einsatz entspricht. Alternativ dazu kann der Abstand zwischen dem Windkanalboden 16 und den Luftführungselementen 14 und 15 so gewählt werden, dass möglichst hohe Fahrzeuggeschwindigkeiten durch eine möglichst hohe Anströmungsgeschwindigkeit der klimatisierten Luft 7 simuliert werden können, ohne die Strömung am Reduktionsmitteltank 2 durch Verwirbelungen an den Wänden des Windkanals 9 bzw. am Boden (fluiddynamische Grenzschicht) zu beeinflussen. Die Luftführungselemente 14 und 15 können zusätzlich profiliert sein oder mit Luftverwirbelungseinrichtungen, wie Spoiler und/oder Diffusoren, ausgestattet sein. Die Ausdehnung in Fahrzeugquerrichtung ist groß genug, um nicht realitätskonforme Luftströmungen zu verhindern. Vorzugsweise erstrecken sich die Luftführungselemente 14 und 15 über die gesamte Breite des Windkanals 9.

Die Luft strömt anschließend über die Austrittsöffnung 11 aus dem Windkanal 9 aus und weiter in Richtung 6 der Klimatisierungseinrichtung 5. Die Wärme, die durch die in dem Reduktionsmitteltank 2 vorgesehene Heizeinrichtung in die Luft eingetragen wird, verteilt sich nach dem Austritt der Luft in der gesamten Kabine 4. Dadurch ist die Differenztemperatur der Luft vor und nach der Klimatisierungseinrichtung 5 entsprechend gering, wodurch die Zieltemperatur der Luft konstant und zuverlässig einstellbar ist.

### Bezugszeichenliste

- 1: Klimafahrzeug
- 2: Fahrzeugkomponente (Reduktionsmitteltank)
- 3: Kabinenaußenwand
- 4: Kabine
- 5: Klimatisierungseinheit
- 6: Luftströmung zwischen Wandkanal und Klimatisierungseinheit
- 7: Luftströmung zwischen Gebläse und Windkanal
- 8: Gebläse
- 9: Windkanal
- 10: Eintrittsöffnung Windkanal
- 11: Austrittsöffnung Windkanal
- 12: röhrenförmiger Kanalteil
- 13: Abschnitt zur Aufnahme der zu testenden Fahrzeugkomponente
- 14: stromaufwärtsseitiges Luftführungselement
- 15: stromabwärtsseitiges Luftführungselement
- 16: Kanalboden
- 17: Verbindungsrohr

## Patentansprüche

1. Klimafahrzeug (1) zum Testen einer Fahrzeugkomponente (2) unter definierten klimatischen Bedingungen, wobei das Klimafahrzeug (1) aufweist
- eine durch eine Kabinenaußenhaut (3) von einer das Klimafahrzeug (1) umgebenden Klimafahrzeugumgebung abgetrennte Kabine (4),
- eine in der Kabine (4) angeordnete Klimatisierungseinheit (5) zum Klimatisieren der in der Kabine (4) vorhandenen Luft (6),
- ein Gebläse (8) zum Beschleunigen der klimatisierten Luft (7) in eine definierte Richtung und
- einen Kanal (9) mit einer Eintrittsöffnung (10) zur Aufnahme beschleunigter klimatisierter Luft (7), einen röhrenförmigen Kanalteil (12) zum Führen der beschleunigten klimatisierten Luft (7) und eine Austrittsöffnung (11) zur Abgabe der geführten beschleunigten klimatisierten Luft (7) in die Kabine (4), wobei der röhrenförmige Kanalteil (12) einen Abschnitt (13) zur Aufnahme der zu testenden Fahrzeugkomponente (2) aufweist.

2. Klimafahrzeug (1) nach Anspruch 1, wobei der Kanalteil des Kanals (9) in Strömungsrichtung der beschleunigten klimatisierten Luft (7) vor dem Abschnitt (13) zur Aufnahme der zu testenden Fahrzeugkomponente (2) ein Luftführungselement (14) aufweist, das ausgebildet ist, die beschleunigte klimatisierte Luft (7) in Strömungsrichtung derart abzulenken, dass die zu testende Fahrzeugkomponente (2) unter denselben Anströmungsbedingungen umströmt wird, wie sie am Einbauort des der Fahrzeugkomponente zugeordneten Fahrzeugs vorhanden sind.

3. Klimafahrzeug (1) nach Anspruch 1, wobei der Kanalteil des Kanals (9) in Strömungsrichtung der beschleunigten klimatisierten Luft (7) vor dem Abschnitt (13) zur Aufnahme der zu testenden Fahrzeugkomponente (2) ein Luftführungselement (14) aufweist, das ausgebildet ist, die beschleunigte klimatisierte Luft (7) in Strömungsrichtung derart abzulenken, dass die zu testende Fahrzeugkomponente (2) mit maximaler Anströmgeschwindigkeit der klimatisierten Luft (7) angeströmt werden kann, ohne die klimatisierte Luft (7) an der zu testenden Fahrzeugkomponente (2) und/oder am röhrenförmigen Kanalteil (12) durch Verwirbelungen innerhalb der fluiddynamischen Grenzschicht zu beeinflussen.

4. Klimafahrzeug (1) nach einem der vorhergehenden Ansprüche, wobei das Gebläse (8) mit einer Steuereinheit zum Steuern der Gebläsestärke in Abhängigkeit der tatsächlich vom Klimafahrzeug gefahrenen Geschwindigkeit in Verbindung steht und die Steuereinheit weiterhin mit einer Geschwindigkeitsmesseinheit und/oder Geschwindigkeitsanzeigeeinheit des Klimafahrzeugs (1) in Verbindung steht.

5. Klimafahrzeug (1) nach einem der vorhergehenden Ansprüche, wobei in dem Abschnitt (13) zur Aufnahme der zu testenden Fahrzeugkomponente (2) eine Heizeinrichtung angeordnet ist.

6. Klimafahrzeug (1) nach einem der vorhergehenden Ansprüche, wobei der Kanal (9) und/oder das Gebläse (8) entfernbar angeordnet sind.

7. Verfahren zum Testen einer Fahrzeugkomponente (2) unter definierten klimatischen Bedingungen in einem Klimafahrzeug (1), bei dem
- ein Kanal (9) mit einer Eintrittsöffnung (10), einem Kanalteil (12) und einer Austrittsöffnung (11) sowie ein Gebläse (8) in einer durch eine Kabinenaußenhaut (3) von der Klimafahrzeugumgebung abgetrennten Kabine (4) des Klimafahrzeugs (1) reversibel oder irreversibel festgelegt werden,
- die zu testende Fahrzeugkomponente (2) in einem dem Kanalteil (12) zugeordneten Abschnitt (13) zur Aufnahme der zu testenden Fahrzeugkomponente (2) angeordnet wird,
- eine in der Kabine (4) angeordnete Klimatisierungseinheit (5) zum Klimatisieren der in der Kabine (4) vorhandenen Luft (6) auf eine Zielklimatisierung eingestellt wird,
- das Gebläse (8) auf eine Gebläsestärke in Abhängigkeit einer tatsächlich vom Klimafahrzeug (1) gefahrenen Geschwindigkeit oder in Abhängigkeit einer vorgegebenen Geschwindigkeit eingestellt wird, und
- das Klimafahrzeug (1) auf einer zufälligen oder vorgegebenen Strecke bewegt wird.

8. Verfahren nach Anspruch 7, wobei eine in dem Abschnitt (13) zur Aufnahme der zu testenden Fahrzeugkomponente (2) angeordnete gerichtet geformte Heizeinrichtung in Abhängigkeit von der im Klimafahrzeug (1) gemessenen und/oder angezeigten Geschwindigkeit und/oder in Abhängigkeit von der seit Testbeginn vergangenen Zeit angesteuert wird.

## Claims

1. Climate vehicle (1) for testing a vehicle component (2) under defined climatic conditions, wherein the climate vehicle (1) has
- a cabin (4) which is separated by a cabin outer skin (3) from climate vehicle surroundings which surround the climate vehicle (1),
- an air-conditioning unit (5) which is arranged in the cabin (4) and which serves for air-conditioning the air (6) which is present in the cabin (4),
- a fan (8) for accelerating the conditioned air (7) in a defined direction, and
- a tunnel (9) with an inlet opening (10) for receiving accelerated conditioned air (7), a tubular tunnel part (12) for conducting the accelerated conditioned air (7), and an outlet opening (11) for discharging the conducted accelerated conditioned air (7) into the cabin (4), wherein the tubular tunnel part (12) has a section (13) for receiving the vehicle component to be tested (2).

2. Climate vehicle (1) according to Claim 1, wherein the tunnel part of the tunnel (9) has, upstream of the section (13) for receiving the vehicle component to be tested (2) in the flow direction of the accelerated conditioned air (7), an air-conducting element (14) which is designed to deflect the accelerated conditioned air (7) in the flow direction such that the vehicle component to be tested (2) is flowed around under the same incident flow conditions as those present at the place of installation in the vehicle associated with the vehicle component.

3. Climate vehicle (1) according to Claim 1, wherein the tunnel part of the tunnel (9) has, upstream of the section (13) for receiving the vehicle component to be tested (2) in the flow direction of the accelerated conditioned air (7), an air-conducting component (14) which is designed to deflect the accelerated conditioned air (7) in the flow direction such that the vehicle component to be tested (2) is able to be flowed against at the maximum incident flow speed of the conditioned air (7) without the conditioned air (7) being influenced on the vehicle component to be tested (2) and/or on the tubular tunnel part (12) by swirling inside the fluid dynamic boundary layer.

4. Climate vehicle (1) according to one of the preceding claims, wherein the fan (8) is connected to a control unit for controlling the fan power in a manner dependent on the speed actually travelled at by the climate vehicle, and the control unit is furthermore connected to a speed measuring unit and/or speed display unit of the climate vehicle (1).

5. Climate vehicle (1) according to one of the preceding claims, wherein a heating device is arranged in the section (13) for receiving the vehicle component to be tested (2).

6. Climate vehicle (1) according to one of the preceding claims, wherein the tunnel (9) and/or the fan (8) are arranged so as to be removable.

7. Method for testing a vehicle component (2) under defined climatic conditions in a climate vehicle (1), in which
- a tunnel (9) with an inlet opening (10), with a tunnel part (12) and with an outlet opening (11), and a fan (8) are fixed in a reversible or irreversible manner in a cabin (4) of the climate vehicle (1), which cabin is separated by a cabin outer skin (3) from the climate vehicle surroundings,
- the vehicle component to be tested (2) is arranged in a section (13) which is assigned to the tunnel part (12) and which serves for receiving the vehicle component to be tested (2),
- an air-conditioning unit (5) which is arranged in the cabin (4) and which serves for conditioning, to a target conditioning, the air (6) which is present in the cabin (4) is set,
- the fan (8) is set to a fan power in a manner dependent on a speed actually travelled at by the climate vehicle (1) or in a manner dependent on a predefined speed, and
- the climate vehicle (1) is moved on a random or predefined route.

8. Method according to Claim 7, wherein a heating device which is arranged in the section (13) for receiving the vehicle component to be tested (2) and which is formed in a targeted manner is activated in a manner dependent on the speed measured and/or displayed in the climate vehicle (1) and/or in a manner dependent on the time which has elapsed since the start of the test.

## Revendications

1. Véhicule climatisé (1) destiné à tester un composant de véhicule (2) dans des conditions climatiques définies, le véhicule climatisé (1) présentant
- une cabine (4) séparée d'un environnement du véhicule climatisé entourant le véhicule climatisé (1) par une peau extérieure de cabine (3),
- une unité de climatisation (5) disposée dans la cabine (4) pour climatiser l'air (6) présent dans la cabine (4),
- une soufflerie (8) pour accélérer l'air climatisé (7) dans une direction définie et
- un canal (9) avec une ouverture d'entrée (10) pour recevoir l'air climatisé accéléré (7), une partie de canal de forme tubulaire (12) pour guider l'air climatisé accéléré (7) et une ouverture de sortie (11) pour délivrer l'air climatisé accéléré guidé (7) dans la cabine (4), la partie de canal de forme tubulaire (12) présentant une portion (13) pour recevoir le composant de véhicule à tester (2).

2. Véhicule climatisé (1) selon la revendication 1, dans lequel la partie de canal du canal (9) dans la direction d'écoulement de l'air climatisé accéléré (7) avant la portion (13) pour recevoir le composant de véhicule à tester (2) présente un élément de guidage d'air (14) qui est réalisé de manière à dévier l'air climatisé accéléré (7) dans la direction d'écoulement de telle sorte que le composant de véhicule à tester (2) soit enveloppé par l'écoulement dans les mêmes conditions d'afflux que celles existant au site d'installation du véhicule associé au composant de véhicule.

3. Véhicule climatisé (1) selon la revendication 1, dans lequel la partie de canal du canal (9) dans la direction d'écoulement de l'air climatisé accéléré (7) avant la portion (13) pour recevoir le composant de véhicule à tester (2) présente un élément de guidage d'air (14) qui est réalisé de manière à dévier l'air climatisé accéléré (7) dans la direction d'écoulement de telle sorte que le composant de véhicule à tester (2) puisse être frappé par l'écoulement avec une vitesse d'afflux maximale de l'air climatisé (7), sans que l'air climatisé (7) au niveau du composant de véhicule à tester (2) et/ou au niveau de la partie de canal de forme tubulaire (12) ne soit affecté par des tourbillonnements à l'intérieur de la couche limite dynamique fluide.

4. Véhicule climatisé (1) selon l'une quelconque des revendications précédentes, dans lequel la soufflerie (8) est en liaison avec une unité de commande pour commander l'intensité de soufflerie en fonction de la vitesse effectivement réalisée par le véhicule climatisé et l'unité de commande est en outre en liaison avec une unité de mesure de vitesse et/ou une unité d'affichage de vitesse du véhicule climatisé (1).

5. Véhicule climatisé (1) selon l'une quelconque des revendications précédentes, dans lequel, dans la portion (13) pour recevoir le composant de véhicule à tester (2) est disposé un dispositif de chauffage.

6. Véhicule climatisé (1) selon l'une quelconque des revendications précédentes, dans lequel le canal (9) et/ou la soufflerie (8) sont disposés de manière amovible.

7. Procédé pour tester un composant de véhicule (2) dans des conditions climatiques définies dans un véhicule climatisé (1), dans lequel
- un canal (9) avec une ouverture d'entrée (10), une partie de canal (12) et une ouverture de sortie (11) et une soufflerie (8) sont fixés de manière réversible ou irréversible dans une cabine (4) du véhicule climatisé (1) séparée de l'environnement du véhicule climatisé par une peau extérieure de cabine (3),
- le composant de véhicule à tester (2) est disposé dans une portion (13) associée à la partie de canal (12) pour recevoir le composant de véhicule à tester (2),
- une unité de climatisation (5) disposée dans la cabine (4) pour climatiser l'air (6) présent dans la cabine (4) est ajustée à une climatisation cible,
- la soufflerie (8) est ajustée à une intensité de soufflerie en fonction d'une vitesse effectivement réalisée par le véhicule climatisé (1) ou en fonction d'une vitesse prédéfinie, et
- le véhicule climatisé (1) est déplacé sur une distance quelconque ou prédéfinie.

8. Procédé selon la revendication 7, dans lequel un dispositif de chauffage formé spécifiquement disposé dans la portion (13) pour recevoir le composant de véhicule à tester (2) est commandé en fonction de la vitesse mesurée et/ou affichée dans le véhicule climatisé (1) et/ou en fonction du temps écoulé depuis le début du test.
